**Europäisches Patentamt**

**European Patent Office**

**Office européen des brevets**

(19)

(11) Veröffentlichungsnummer: **0 069 744**
**B1**

(12) **EUROPÄISCHE PATENTSCHRIFT**

(45) Veröffentlichungstag der Patentschrift:
**23.04.86**

(51) Int. Cl.⁴: **F 16 B 12/12**

(21) Anmeldenummer: **82900188.2**

(22) Anmeldetag: **29.12.81**

(86) Internationale Anmeldenummer:
**PCT/EP 81/00207**

(87) Internationale Veröffentlichungsnummer:
**WO 82/02578 (05.08.82 Gazette 82/19)**

(54) **VORRICHTUNG ZUR VERBINDUNG ZWEIER STREBEN UNTER ZWISCHENFÜGUNG EINER ZU DIESEN SENKRECHTEN STÜTZE.**

(30) Priorität: **22.01.81 DE 3102027**

(43) Veröffentlichungstag der Anmeldung:
**19.01.83 Patentblatt 83/3**

(45) Bekanntmachung des Hinweises auf die Patenterteilung:
**23.04.86 Patentblatt 86/17**

(84) Benannte Vertragsstaaten:
**AT BE CH FR GB LI LU NL SE**

(56) Entgegenhaltungen:
**EP - A - 0 008 713**
**CH - A - 389 850**
**DE - A - 2 825 408**
**DE - A - 2 932 469**
**GB - A - 839 660**

(73) Patentinhaber: **BRUNN, Oswald, Bunzlauer Platz 1,**
**D-8000 München 50 (DE)**

(72) Erfinder: **BRUNN, Oswald, Bunzlauer Platz 1,**
**D-8000 München 50 (DE)**

(74) Vertreter: **Kreutz, Karl-Jürgen, Patentanwalt Dipl.-Ing.**
**Karl Jürgen Kreutz Osterwaldstrasse 149,**
**D-8000 München 40 (DE)**

## Beschreibung

Die Erfindung betrifft einen Möbelverbinder zur stirnseitigen Verbindung der Enden zweier horizontaler Streben unter Zwischenfügung einer vertikalen Stütze gemäss dem erstem Teil des Patentanspruchs 1.

Solche Möbelverbinder werden bei Kombinationsmöbeln nach der DT-A-2 825 408 benötigt. Die hierzu bekannte Verbindung besteht aus Dübeln und Schrauben, die zwischen den Streben und Stützen eingesetzt sind. Diese Verbindungen lassen sich zwar ausreichend stabil und formbeständig herstellen, jedoch sind sie relativ umständlich anzubringen und zu lösen. Es wäre daher eine noch einfachere Verbindung dieser Art zweckmässig, um insbesondere älteren oder gebrechlichen Personen die Montage oder Demontage eines solchen Möbels zu erleichtern. Auch müssen bisher die gegeneinander anliegenden Flächen relativ gross sein, damit sich unter den im praktischen Betrieb, bei der Handhabung, auftretenden mechanischen Belastungen die Stirnflächen der Streben nicht in das Material der Stützen hineindrücken, was zu einer Schiefstellung der Stützen führen würde. (Beispielsweise würden dann im Laufe des Gebrauchs zwischen den Stützen vorgesehene bewegliche Teile, beispielsweise eine verstellbare Rückenlehne, nicht mehr zwischen die Stützen passen.) Solche relativ grossen Anlageflächen bedingen aber entsprechende Querschnitte und damit einen entsprechend grossen Materialaufwand. Dies gilt besonders, wenn zwischen den endständigen Stützen eingefügte (Zwischen-) Stützen nicht oder nicht vollständig auf dem Erdboden abgestützt sind.

Gemäss der CH-PS 616 993 werden plattenförmige Verbindungsteile in Schlitze an den zu verbindenden Teilen eingesetzt. Jeweils ein Haken an der einen Platte greift in ein Hakenmaul an der anderen Platte. Mit einer solchen Verbindung können aber immer nur zwei Teile miteinander verbunden werden, wobei die übertragbaren Kräfte begrenzt sind. Da ferner der Haken und das Hakenmaul in Draufsicht rechteckig sind, ist die Verbindung auch bei genauer Fertigung der Verbindungsplatten relativ lose, so dass sich die Teile zu leicht unbeabsichtigt voneinander lösen können. Diese Gefahr wird noch dadurch vergrössert, dass die obere Rückenfläche jeden Hakens nicht unterstützt ist.

Aus der GB-PS 839 660 ist eine weitere Vorrichtung zur Verbindung zweier gegeneinander anliegender Teile, insbesondere Platten bekannt, wobei ebenfalls in Nuten an den Platten mit Schlitzen versehene Streifen eingesetzt werden. Ein dazwischengefügtes Kupplungsteil greift mit seitlichen Flügeln in die Schlitze ein. Die Schlitze sind dabei weiter als die Flügel. An dem einen Ende des Kupplungsteils ist ein Gewinde vorgesehen, auf welchem eine Schraube verschraubbar ist, deren Kopf gegen die Enden der beiden Verbindungsstreifen zur Anlage gelangt. Hierdurch werden die Flügel längs ihrer jeweils einen Stirnfläche gegen eine Stirnfläche des Schlitzes angezogen. Über die Flügel und Schlitze können also nur in der einen Richtung Kräfte übertragen werden, in der Gegenrichtung wirkende Kräfte müssen über besagte Schraubverbindung übertragen werden. Es können also immer nur zwei Teile miteinander verbunden werden, wobei die übertragbaren Kräfte relativ gering sind und noch dazu eine an sich unerwünschte Schraubverbindung erforderlich ist.

Aus der EP-A-8713 ist eine Verbindung für Skelettkonstruktionen bekannt, bei der in den Trägerenden Last abgebende Platten mit je einem hakenförmigen Fortsatz eingesetzt sind. Entsprechend dienen in den Stützenköpfen eingelassene Platten mit je den hakenförmigen Fortsätzen entsprechender Formgebung zur Aufnahme der Last. Hierbei liegt jeweils eine untere horizontale Auflagefläche des Hakens auf einer entsprechenden horizontalen Auflagefläche im Grunde des Hakenmauls der Wiederlager-Platte in der Stütze. Horizontale Schub- und/oder Zugkräfte können über entsprechende vertikale Flächen an dem Haken einerseits und dem Hakenmaul anderseits übertragen werden. Dabei ist gemäss Fig. 11 in einem Pfosten auch eine Auflagerplatte mit zwei solchen rechteckigen Ausklinkungen oder Hakenmäulern vorgesehen, zur Auflagerung von zwei Streben von entgegengesetzten Seiten her. Auch bei dieser Ausführung können vertikale Lasten sowie horizontale Zug- und Schubkräfte übertragen werden. Es kann aber kein bzw. nur ein sehr geringes Biegemoment von der einen Strebe auf den Pfosten und/oder die andere Strebe übertragen werden. Die Haken und Hakenmäuler müssen sehr genau gefertigt werden, damit sie möglichst spielfrei ineinander passen, wobei die Montage entsprechend schwierig ist.

Dem gegenüber liegt der Erfindung die Aufgabe zugrunde, einen Möbelverbinder zur stirnseitigen Verbindung der Enden zweier horizontaler Streben unter Zwischenfügung einer vertikalen Stütze zu schaffen, mit welchen Streben und Stützen leicht und schnell miteinander verbunden und wieder demontiert werden können, wobei die Verbindung möglichst fest ist und ausser vertikalen Lasten und horizontalen Schub- und Druckkräften auch Biegemomente von der einen Strebe auf die Stütze und/oder auf die andere Strebe übertragen werden können. Die Lösung dieser Aufgabe ist in dem Kennzeichnungsteil des Patentanspruchs 1 angegeben und wird durch die Merkmale der Unteransprüche weiter ausgestaltet.

Bei dem erfindungsgemässen Möbelverbinder sind die Zähne und Taschen keilförmig gestaltet, derart, dass sich die Zähne in den Taschen verkeilen. Über jeden dieser keilförmigen Zähne und Taschen können auch Biegenomente übertragen werden. Dies ist besonders wichtig, wenn eine zwischengefügte Stütze nicht ausreichend unterstützt ist. Da mehrere keilförmige Zähne und Taschen im Abstand untereinander vorgesehen sind, können auch relativ hohe Biegemomente übertragen werden. Dank der Keilform verkeilen sich die Zähne in den Taschen, so dass die Kräfte und Momente unmittelbar über die unter Vorspannung gegeneinander anliegenden Rücken bzw. Zahnflanken übertragen werden, wobei die einander zugekehrten Stirnflächen der Streben und Pfosten von Druckkräften entlastet sind. Bei dem Eingreifen der Zähne in die Taschen kommt zunächst jeweils der untere, steilere Teil der vorderen Flanken jedes Zahnes zur Anlage an die entsprechende Gegenfläche der Tasche. Der grössere Teil der Last wird also zunächst über diesen steileren Zahnflankenteil übertragen, worauf bei ansteigender oder zusätzlicher Belastung auch der jeweils obere, flachere Zahnflankenteil belastet wird, insbesondere zur Übertragung von Biegemomenten. Zur näheren Erläuterung wird nachfolgend ein Ausführungsbeispiel anhand der Zeichnung beschrieben, wobei auch die Merkmale der Unteransprüche näher erläutert werden.

Fig. 1 zeigt ein vorbekanntes Gartenmöbel in Ansicht.

Fig. 2 zeigt – zum nachfolgenden Vergleich mit der Erfindung – die bisher bei dem Gartenmöbel nach Fig. 1 vorgesehene Verbindung.

Fig. 3 und 4 zeigen demgegenüber in entsprechender Darstellungsweise dieses Gartenmöbel mit erfindungsgemässen Möbelverbindern.

Fig. 5 entspricht der Fig. 4, wobei lediglich die Teile horizontal auseinander gezogen (bzw. vor dem Zusammensetzen) gezeichnet sind.

Fig. 6 zeigt den Querschnitt nach Linie VI–VI in Fig. 3 und 4.

Fig. 7 zeigt in grösserem Massstab die Einzelheit nach Linie VII in Fig. 4, nämlich eine Verrastung der miteinander verbundenen Teile.

Fig. 8 zeigt in grösserem Massstab die Besonderheit nach Linie VIII in Fig. 4.

Fig. 9 zeigt in Draufsicht von oben einige mittels erfindungsgemässen Verbindern miteinander unter einem stumpfen Winkel verbundene Möbelelemente.

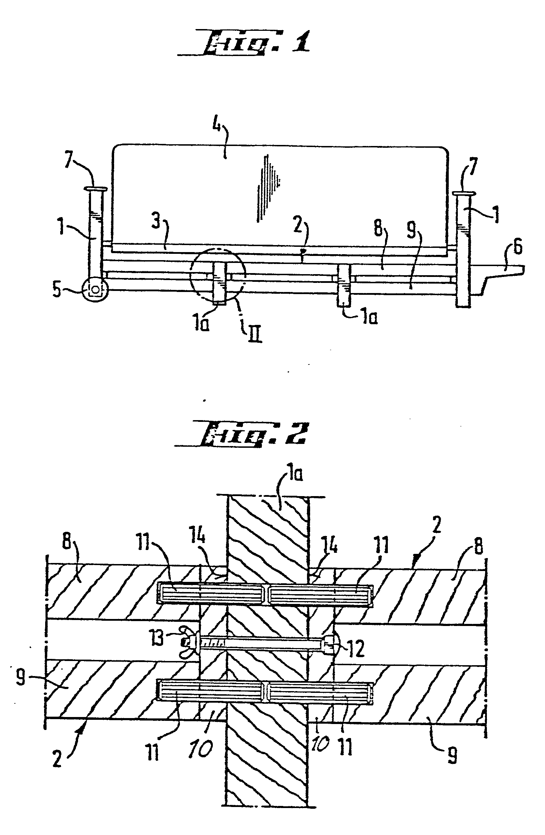

Fig. 1 zeigt beispielsweise eine schubkarrenartig verfahrbare Sitzbank oder Liege aus Holz, insbesondere für den Gebrauch im Garten oder auf einer Terrasse. Aus vertikalen Rahmen oder Stützen 1 bzw. 1a und sich zwischen diesen erstreckenden horizontalen Streben 2 ist ein Grundrahmen oder Gestell zusammengesetzt, auf welchem ein dreisitziges Sitzteil 3 und eine entsprechende Rückenlehne 4 festgemacht sind. An dem einen Ende des Rahmens sind Räder 5 und an dem anderen Ende Handgriffe 6 zum schubkarrenartigen Verfahren des Möbels vorgesehen. Die endständigen Stützen 1 sind höher als die mittelständigen Stützen 1a und tragen Armlehnen 7.

Ein solches Möbel soll möglichst leicht sein und vor allen Dingen sollen natürlich die Verbindungen insbesondere zwischen den Stützen 1, 1a und Streben 2 ausreichend fest sein, gleichzeitig sollen diese Verbindungen aber auch möglichst einfach gestaltet sein, damit das Möbel leicht zusammengesetzt und wieder auseinandergenommen werden kann, beispielsweise um es während des Winters zu verstauen.

Die bisher zu diesem Zweck vorgesehene Verbindung ist in Fig. 2 gezeigt: Jede horizontale Strebe 2 besteht rahmenartig aus einem oberen Holm 8 und einem unteren Holm 9, die an ihren Enden mittels je eines vertikalen Endstückes 10 miteinander verbunden sind. In entsprechende horizontale Bohrungen in den Holmen 8, 9 sowie in der Stütze 1, 1a sind Dübel 11 eingesetzt. Die so zusammensteckbaren Teile sind mittels einer durch entsprechende Bohrungen hindurchgesteckten Schraube 12 mit Flügelmutter 13 zusammengehalten bzw. zusammengespannt.

Es ist ersichtlich, dass diese Verbindung sehr hoch belastet wird. Dies gilt besonders dann, wenn die Stützen 1a nicht oder nicht ausreichend auf dem Erdboden aufruhen. Tatsächlich soll sich das Möbel nur über die endständigen Stützen 1 gegenüber dem Erdboden abstützen. Die in Fig. 2 angedeuteten gegenseitigen Anlageflächen 14 werden hierbei besonders hoch auf Druck beansprucht, so dass sich hier das Holz der Streben in die Stützen hineindrückt, wodurch die Verbindung locker bzw. wackelig wird, sofern diese Anlageflächen nicht ausreichend gross dimensioniert werden.

Diese Gefahr ist dank der erfindungsgemässen Verbindung vermieden, welche ausserdem auch bedeutend leichter, insbesondere schraubenlos zusammengesetzt und wieder gelöst werden kann, wie nachfolgend im einzelnen beschrieben wird:

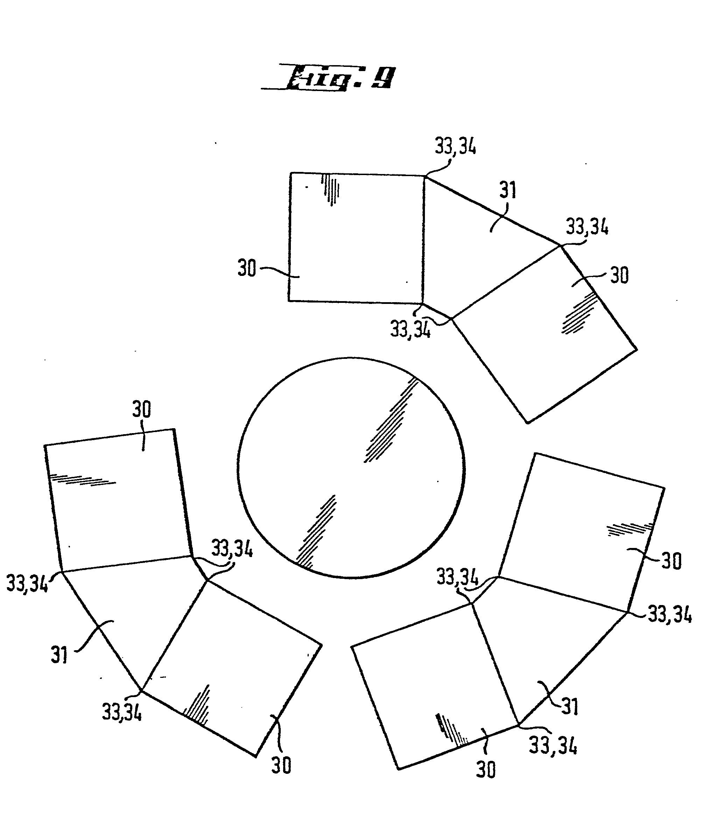

Wie besonders Fig. 4, 5, 6 zeigen, sind in den Enden der Streben 2 Schlitze eingefräst, in welche je eine Platte 15 mit sich aus dem Schlitz hervor nach schräg unten erstreckenden Zähnen 16 eingesetzt sind. Es sind drei Zähne 16 in gleichmässigem Abstand untereinander vorgesehen. In einen durchgehenden Schlitz jeder vertikalen Stütze 1 bzw. 1a ist eine Platte 17 eingesetzt, welche beidseits mit den Zähnen 16 entsprechenden Taschen 18 versehen sind. Die Zähne 16 der in den horizontalen Streben 2 festsitzenden Platten 15 passen also genau in die Taschen 18 der in den vertikalen Stützen 1, 1a eingesetzten Platten 17, womit eine – im einfachsten Falle – hakenartige Verbindung zustandekommt.

Mittels sich quer durch die Platten 15 bzw. 17 und Streben 2 bzw. Stützen 1, 1a hindurcherstreckenden Bolzen 19 sind die Platten in den Schlitzen festgemacht und genau positioniert. Ausserdem sind die Platten vollflächig in den Schlitzen verleimt. Die Platten 15 haben hierbei einspringende Ecken 20, in welchen überschüssiger Leim aufgenommen werden kann, so dass reichlich Leim angewendet werden kann, was der Festigkeit der Verbindung zugute kommt.

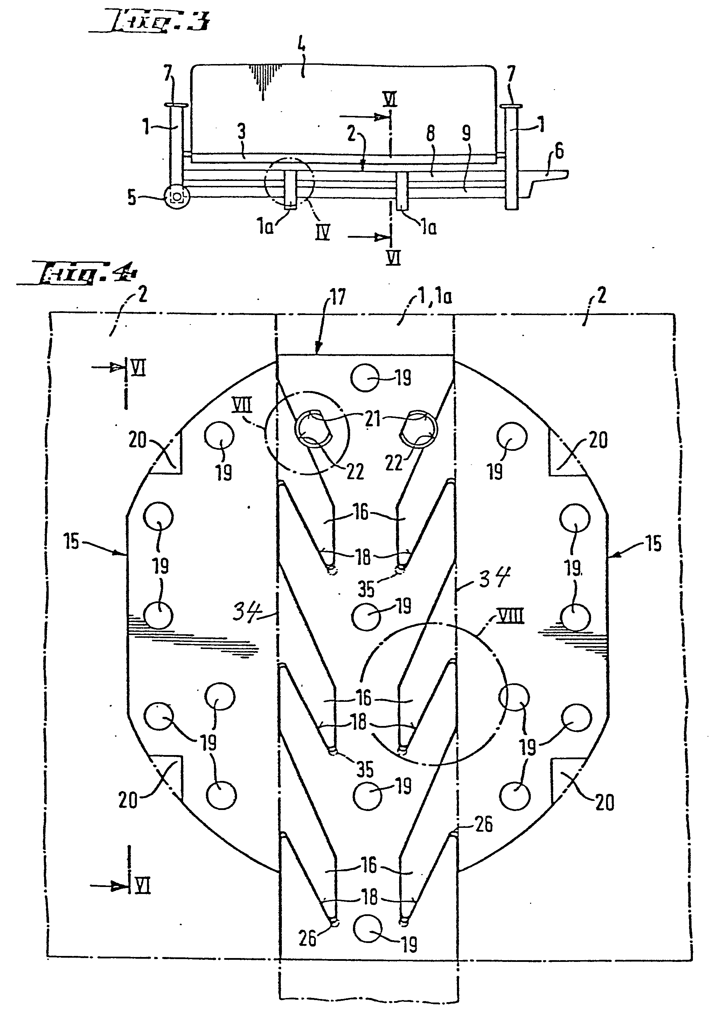

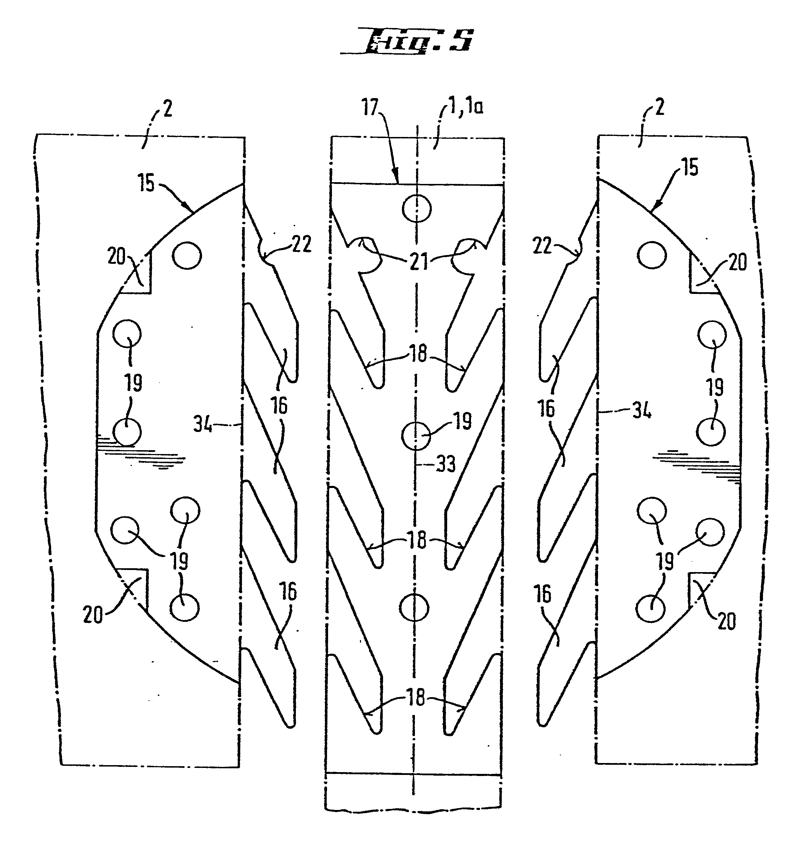

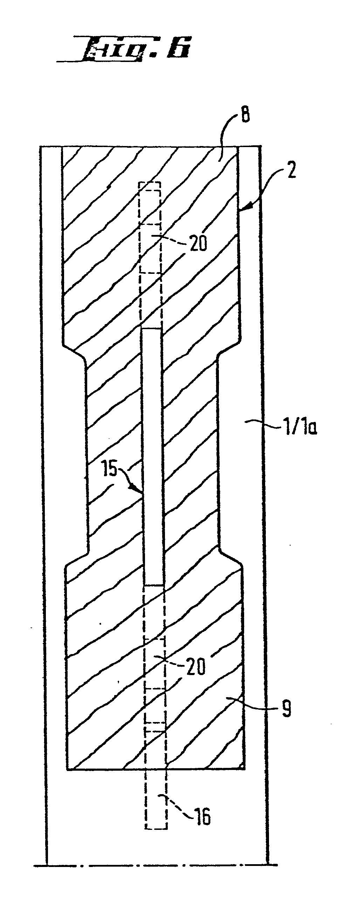

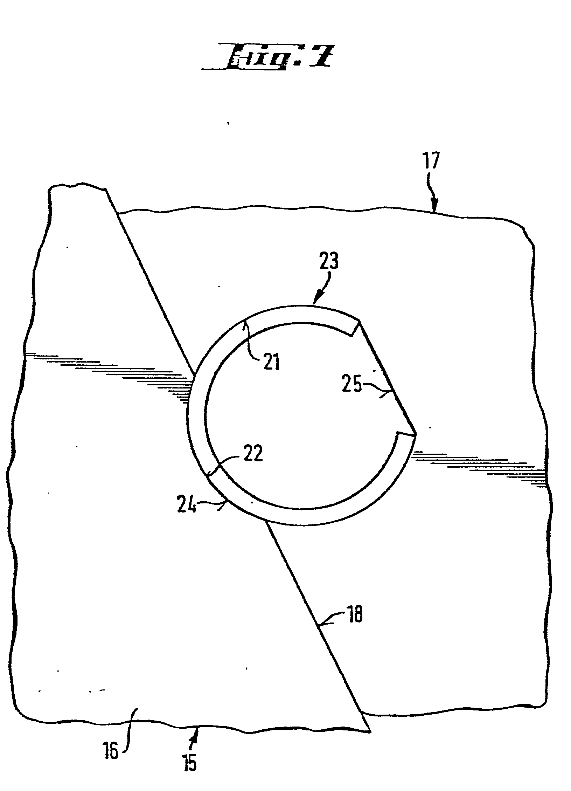

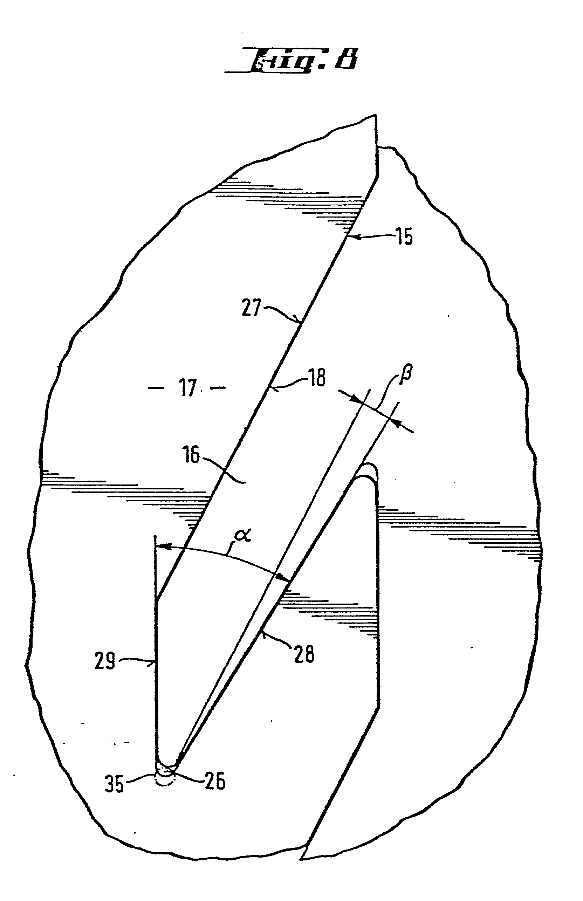

Wie der Querschnitt Fig. 6 (vgl. auch Fig. 3) zeigt, können dank der Erfindung die Streben 2 einstückig sein, was der Einfachheit und gleichzeitig der Festigkeit zugute kommt, da ja ein Zwischenraum zum Durchstecken einer Verbindungsschraube 12, 13 (vgl. Fig. 2) nicht erforderlich ist.

Dank der Erfindung können die Teile einfach ineinander eingehängt bzw. eingehakt werden. Dieser Vorgang ist noch vereinfacht durch die Schnapprastverbindung gemäss Fig. 7. An den gegeneinander anliegenden Schmalseiten bzw. Rücken eines Zahnes 16 einerseits und einer Tasche 18 anderseits ist ein Schnappelement eingesetzt. Und zwar ist in der in der Stütze festgemachten Platte 17 eine im wesentlichen kreisförmige Ausnehmung 21 vorgesehen, die sich mit einem Teil ihres Umfanges – in der zusammengesetzten Stellung – in den Zahn 16 hineinerstreckt. In diese Ausnehmung 21 ist eine Ringfeder 23 eingesetzt, die sich also mit dem mittleren Teil 24 ihres Umfanges in die entsprechende Einwölbung 22 des Zahnes 16 hineinerstreckt. Durch eine Abflachung 25 ist die Ringfeder 23 gegen Verdrehen gesichert. Beim Zusammensetzen der Teile wird also der vorstehende Bereich 24 der Ringfeder 23 elastisch eingedrückt, um dann in die Einwölbung 24 an der Flanke des Zahnes 16 einzurasten.

Bei der erfindungsgemässen Verbindung werden die – etwa beim Verfahren des Möbels nach Fig. 1 – im oberen Bereich der Streben 2 auftretenden Druckkräfte nicht mehr von der einen Strebe 2 über die Anlagefläche 14 auf die Stütze 1 bzw. 1a, durch diese hindurch und dann über die Anlagefläche 14 an der gegenüberliegenden Seite auf die andere Strebe 2 übertragen, vielmehr sind diese Anlageflächen 14 druckentlastet oder sogar drucklos und die Druckkräfte werden unmittelbar über die Stirnflächen bzw. Flanken der ineinander eingreifenden Zähne 16 und Taschen 18 übertragen, und zwar wird die Druckkraft über die oberen Zähne/Taschen 16/18 übertragen; die an dem unteren Bereich der Streben 2 auftretenden entsprechenden Zugkräfte werden hauptsächlich über die unteren Zähne 16 bzw. Taschen 18 übertragen – und nicht mehr über die bisher in Fig. 2 mittig vorgesehene Schraube 12.

Die Übertragung dieser von den äusseren Belastungen herrührenden Kräfte erfolgt über die aneinander anliegenden, schräg geneigten Stirnflächen oder Flanken der Zähne 16 bzw. Taschen 18. Hierzu würde es ausreichen, wenn diese Flächen im unbelasteten Zustand einfach lose aneinander anliegen, jedoch könnte sich bei einem solchen losen Anliegen (trotz der Schnapprastverbindung nach Fig. 8) die Verbindung unbeabsichtigt lösen bzw. eine solche Verbindung wäre überhaupt zu lose und locker. Die erfindungsgemässe Verbindung wird daher so ausgeführt, dass die Flanken der Zähne 16 und dementsprechend der Taschen 18 sich keilförmig nach unten verjüngen, so dass die gegeneinander anliegenden Stirnflächen bzw. Flanken von vornherein – auch bei Abwesenheit äusserer Belastung – unter einer Druckspannung vorgespannt sind. Damit diese Verkeilung eintreten kann, ist der Grund jeder Tasche 18 ausgekehlt bzw. das untere Ende jedes Zahnes ist entsprechend verkürzt, so dass jeweils ein Zwischenraum 26 verbleibt. In diesen Zwischenraum 28 bzw. Zahngrund mündet eine sich durch den Pfosten nach aussen erstreckende Entlüftungsbohrung 35, durch die hindurch auch eingedrungener Schmutz herausgespült werden kann. Ein vom unteren Teil 29 abgewinkelter oberer Teil 27 der Flanke jedes Zahnes 16 bzw. jeder Tasche 18 verläuft spitzwinklig gegenüber der gegenüberliegenden Flanke 28. Ausser einem Keilwinkel $\alpha$ von ca. 30° (Fig. 8) ist also noch ein weiterer, allerdings sehr viel kleinerer Keilwinkel $\beta$ von ca. 1° vorgesehen, es sind also an ein und der gleichen Flanke zwei Keilwinkel, nämlich ein grösserer Keilwinkel $\alpha$ und ein sehr viel kleinerer Keilwinkel $\beta$ hintereinandergeschaltet. Der grösste Teil der zu übertragenden Druckkraft wird jeweils über die unteren Keilflächen (Flanken 28) übertragen; ein Teil dieser Druckkraft wird aber auch über die obere Keilfläche 27 übertragen.

Bei der bisherigen Verbindung nach Fig. 2 müssen die horizontalen Streben 2 in ein und derselben Geraden liegen. Dank der erfindungsgemässen Verbindung können diese Streben 2 aber auch relativ leicht unter einem kleineren Winkel als 180° zusammenstossen, es ist also eine stumpfwinklige Anordnung von Möbeln etwa nach Fig. 9 möglich. Gemäss Fig. 9 ist zwischen zwei Sesseln 30 ein trapezförmiges Tischchen 31 vorgesehen. Die beiden Sessel sind mit dem Tischchen zu je einer Einheit verbunden, drei solche Einheiten sind um einen runden Tisch herum gruppiert. Zu diesem Zweck sind die Verbindungselemente entsprechend abgewinkelt, und zwar vorzugsweise nach der Symmetrielinie 33 in Fig. 5. Diese Abwinklung kann relativ leicht durch einen Pressvorgang hergestellt werden. Allerdings kann diese Abwinklung der mittleren Platte 17 nur relativ klein sein, da die abgewinkelte Platte ja in den Schlitz in der Stütze 1, 1a eingesetzt werden muss. Man kann aber die mittlere Platte 17 auch eben lassen und stattdessen die Zähne 16 der beiden seitlichen Platten (15) (oder auch nur einer der beiden Platten) abwinkeln, und zwar nach der Linie 34 in Fig. 4 bzw. Fig. 5.

Schliesslich sei noch erwähnt, dass die mittlere Platte 17 auch bedeutend breiter gemacht werden kann, so dass die Taschen 18 nicht in der vertikalen Stütze, sondern in den horizontalen Streben liegen, dass also die Zähne 16 und Taschen 18 nicht innerhalb der vertikalen Stütze, sondern innerhalb der horizontalen Streben ineinandergreifen. Natürlich kann man diese Verbindung auch so ansehen und gestalten, dass die Zähne 16 umgekehrt an der mittleren Platte 17 und dementsprechend die Taschen 18 an den seitlichen Platten 15 ausgebildet sind.

Vorstehend ist die Erfindung in Verbindung mit einem zerlegbaren Gartenmöbel in der Form einer Sitzbank oder Liege oder in Form von Tisch und Sesselelementen beschrieben worden. Es gibt aber noch weitere Anwendungsfälle für die erfindungsgemässe Verbindung, z.B. Regale. Die erfindungsgemässe Verbindung ist gerade dann besonders günstig, wenn sie von oben, also senkrecht zur Längsrichtung der Streben belastet wird, die Stützen bzw. wenigstens eine Stütze aber nicht unterstützt sind (ist).

**Patentansprüche**

1. Möbelverbinder zur stirnseitigen Verbindung der Enden zweier horizontaler Streben (2) unter Zwischenfügung einer vertikalen Stütze (1, 1a), dadurch gekennzeichnet, dass in je einem an den einander zugekehrten Enden der Streben (2) vorgesehenen, sich in Längsrichtung der Streben erstreckenden Schlitz eine Platte (15) festgemacht ist, die wenigstens zwei sich aus der Stirnseite hervor schräg nach unten erstreckende Ansätze oder Zähne (16) aufweist, wobei die obere Schmalseite oder Flanke jedes Zahnes (16) einen unteren, steileren Teil (29) und einen oberen, weniger steilen Teil (27) aufweist, wobei der untere Teil (29) einen relativ grossen Winkel α und der obere Teil (27) einen demgegenüber sehr viel kleineren Winkel β mit der gegenüberliegenden, unteren Schmalseite oder Flanke (28) einschliessen, dass in einem an der Stütze (1, 1a) vorgesehenen, durchgehenden Schlitz eine Platte (17) mit beidseits jeweils wenigstens zwei den Ansätzen oder Zähnen entsprechenden Taschen (18) festgemacht ist, und dass der Grund jeder Tasche (18) ausgekehlt bzw. das untere Ende jedes Zahnes (16) entsprechend verkürzt ist zur Bildung eines Zwischenraumes (26).

2. Möbelverbinder nach Anspruch 1, gekennzeichnet durch sich quer durch die Platten (15, 17) hindurch erstreckende Stifte oder Bolzen (19) zur Befestigung der Platten.

3. Möbelverbinder nach Anspruch 1 oder 2, dadurch gekennzeichnet, dass die in die Streben (2) eingesetzten Platten (15) an ihrem Umfang wenigstens eine Kerbe bzw. einspringende Ecke (20) aufweisen.

4. Möbelverbinder nach wenigstens einem der Ansprüche 1 bis 3, dadurch gekennzeichnet, dass an den Stützen (1, 1a) Entlüftungsbohrungen (35) vorgesehen sind, die sich bis zum Grund der Taschen (18) erstrecken.

5. Möbelverbinder nach wenigstens einem der vorhergehenden Ansprüche, gekennzeichnet durch ein zwischen Zahn (16) und Tasche (18) wirkendes, elastisches Schnapp-Element (23).

6. Möbelverbinder nach Anspruch 5, dadurch gekennzeichnet, dass das Schnapp-Element von einer Ringfeder (23) aus elastischem Material gebildet ist, welche mit dem grössten Teil ihres Umfanges gegen Verdrehung gesichert in eine Ausnehmung (21) an der eine Tasche (18) aufweisenden Platte (17) eingesetzt ist und in der Verriegelungsstellung mit dem restlichen Teil ihres Umfanges in eine entsprechende Ausnehmung (22) an dem Zahn (16) einschnappt.

7. Möbelverbinder nach wenigstens einem der vorhergehenden Ansprüche, dadurch gekennzeichnet, dass die in den Stützen (1, 1a) eingesetzte Platte (17) zur Verbindung der Streben (2) unter einem von 180° abweichenden Winkel entlang einer Längsmittel-Symmetrielinie (33) gebogen bzw. abgewinkelt ist.

8. Möbelverbinder nach Anspruch 6, dadurch gekennzeichnet, dass zur Verbindung der Streben (2) unter einem von 180° abweichenden Winkel die Zähne (16) längs einer durch den Zahngrund gehenden Biegelinie (34) abgewinkelt sind.

9. Möbelverbinder nach wenigstens einem der vorhergehenden Ansprüche, dadurch gekennzeichnet, dass die in die Streben (2) eingesetzten Platten (15) und die in die Stütze (1, 1a) eingesetzte Platte (17) aus ein- und dergleichen Materialplatte ausgestanzt sind.

10. Möbelverbinder nach Anspruch 1, dadurch gekennzeichnet, dass jeweils drei Zähne (16) bzw. Taschen (18) untereinander vorgesehen sind.

## Claims

1. A furniture connector for connecting two horizontal braces (2) at their end faces with interposition of a vertical post (1, 1a) characterized in that a slot extending in the longitudinal direction of the braces (2) is formed in each of the confronting ends of the braces (2), a plate (15) is fixed in said slots and formed with at least two extensions or teeth (16), which extend from the end face and are downwardly inclined, the upper narrow side or edge face of each tooth (16) has a steeper lower portion (29) and a less steep upper portion (27), the lower portion (29) includes a relatively large angle α and the upper portion (27) includes a very much smaller angle β with the opposite lower narrow side or edge face (28), the post (1, 1a) is formed with a through slot, in which a plate (17) is fixed, which is formed at each of its ends with at least two pockets (18), which conform to the extensions or teeth, and the bottom of each pocket (18) is recessed or the lower end of each tooth (16) is correspondingly shortened so that a free space (26) is left.

2. A furniture connector according to claim 1, characterized by pins or bolts (19), which extend transversely through the plates (15, 17) and serve to secure the plates.

3. A furniture connector according to claim 1 or 2, characterized in that the plates (15) which are inserted in the braces (2) are provided at their periphery with at least one indentation or reentrant corner (20).

4. A furniture connector according to at least one of claims 1 to 3, characterized in that the posts (1, 1a) are provided with venting bores (35), which extend as far as to the bottom of the pockets (18).

5. A furniture connector according to at least one of the preceding claims, characterized by an elastic snap-in element (23) which acts between the tooth (16) and the pocket (18).

6. A furniture connector according to claim 5, characterized in that the snap-in element consists of an annular spring (23), which is made of elastic material and is inserted in a recess (21) of the plate (17) provided with a pocket (18), which spring is held against rotation at a major part of its periphery and in locking position snaps with the remaining portion of its periphery into a corresponding recess (22) of the tooth (16).

7. A furniture connector according to at least one of the preceding claims, characterized in that the plate (17) which is inserted in the posts (1, 1a) is bent or angled along a longitudinal center line of symmetry (33) to connect the braces (2) extending at an angle different from 180°.

8. A furniture connector according to claim 6, characterized in that the teeth (16) are angled along a line of bend (34) extending through the root of the tooth for a connection between braces (2) extending at an angle differing from 180°.

9. A furniture connector according to at least one of the preceding claims, characterized in that the plates (15) inserted in the braces (2) and the plate (17) inserted in the post (1, 1a) have been stamped from one and the same plate.

10. A furniture connector according to claim 1, characterized in that three teeth (16) respectively pockets (18) are provided one below the other.

## Revendications

1. Attache pour meubles, destinée à la liaison par leur côté frontal des extrémités de deux entretoises horizontales (2) avec interposition d'un montant vertical (1, 1a), caractérisée en ce qu'une plaque (15) est fixée dans une fente prévue dans les extrémités tournées l'une vers l'autre des entretoises (2), s'étendant en direction longitudinale des entretoises, qui comprend au moins deux appendices ou dents (16) s'étendant à partir du côté frontal en oblique vers le bas, le chant ou flanc supérieur de chaque dent (16) présentant une partie inférieure plus en oblique (29) et une partie supérieure moins en oblique (27), la partie inférieure (29) formant un angle ($\alpha$) relativement important et la partie supérieure un angle ($\beta$) beaucoup plus petit que ce dernier avec le chant ou flanc inférieur opposé (28), en ce qu'une plaque (17) comportant sur chacun de ses côtés au moins deux poches (18) correspondant respectivement aux appendices ou dents est fixée dans une fente traversante prévue dans le montant (1, 1a), et en ce que le fond de chaque poche (18) forme une gorge, ou l'extrémité inférieure de chaque dent (16) est raccourcie de façon correspondante, en vue de former un espace intermédiaire (26).

2. Attache pour meubles selon la revendication 1, caractérisée par des chevilles ou goujons (19) s'étendant transversalement au travers des plaques (15, 17) et destinés à la fixation des plaques.

3. Attache pour meubles selon la revendication 1 ou 2, caractérisée en ce que les plaques (15) incorporées dans les entretoises (2) présentent sur leur périphérie au moins une entaille ou un coin rentrant (20).

4. Attache pour meubles selon l'une au moins des revendications 1 à 3, caractérisée en ce que dans les montants (1, 1a) sont prévus des alésages de désaération s'étendant jusqu'au fond des poches (18).

5. Attache pour meubles selon l'une au moins des revendications précédentes, caractérisée par un élément élastique à enclenchement (23) agissant entre la dent (16) et la poche (18).

6. Attache pour meubles selon la revendication 5, caractérisée en ce que l'élément à enclenchement est constitué par un ressort annulaire (23) en un matériau élastique, qui est introduit par la plus grande partie de sa périphérie et en étant empêché de tourner dans un évidement (21) de la plaque (17) comportant une poche (18) et s'enclenche, en position verrouillée, par la partie restante de sa périphérie, dans un évidement correspondant (22) de la dent (16).

7. Attache pour meubles selon l'une au moins des revendications précédentes, caractérisée en ce que la plaque (17) incorporée dans le montant (1, 1a) est pliée ou coudée en vue de la liaison des entretoises (2) selon un angle différent de 180° le long d'une ligne médiane longitudinale de symétrie (33).

8. Attache pour meubles selon la revendication 6, caractérisée en ce que pour relier les entretoises (22) selon un angle différent de 180°, les dents (16) sont repliées le long d'une ligne de pliage (34) passant par le fond des dents.

9. Attache pour meubles selon l'une au moins des revendications précédentes, caractérisée en ce que les plaques (15) incorporées dans les entretoises (2) et la plaque (17) incorporée dans le montant (1, 1a) sont estampées à partir du même matériau en plaque.

10. Attache pour meubles selon la revendication 1, caractérisée en ce que trois dents (16) ou poches (18) sont prévues l'une au dessous de l'autre.

# Fig. 1

# Fig. 2

0 069 744

Fig. 3

Fig. 4

9

## Fig. 5

# Fig. 6

Fig.7

*Fig. 8*

# Fig. 9